# EUROPÄISCHE PATENTSCHRIFT

(11) **EP 3 483 463 B1**
(45) Veröffentlichungstag und Bekanntmachung des Hinweises auf die Patenterteilung: **21.07.2021**
(21) Anmeldenummer: 18000842.7
(22) Anmeldetag: 29.10.2018
(51) Int. Cl.: F16D 3/223

(54) **GELENKANORDNUNG**
JOINT ASSEMBLY
DISPOSITIF D'ARTICULATION

(30) Priorität: 10.11.2017 DE 102017010421
(43) Veröffentlichungstag der Anmeldung: 15.05.2019
(73) Patentinhaber: Neumayer Tekfor Engineering GmbH, 77756 Hausach (DE)
(72) Erfinder: Fuchs, Christian, 77716 Fischerbach (DE); Schöner, Daniel, 77784 Oberharmersbach (DE); Lehmann, Martin, 78132 Hornberg (DE)

(56) Entgegenhaltungen:
- DE-A1- 3 739 927
- JP-A- 2012 087 820
- US-A1- 2006 185 124

## Beschreibung

Die vorliegende Erfindung betrifft eine Gelenkanordnung gemäß dem Oberbegriff des ersten Anspruchs.

Eine gattungsgemäße Gelenkanordnung offenbart die JP 2012-087820 A. Dabei ist ein Sprengring vorgesehen, um eine Welle mit der Innennabe des Gelenks zu verbinden.

Die Gelenkanordnung besteht zumindest aus einem Gelenk und aus weiteren Komponenten, die es erlauben, das Gelenk zwischen zwei Wellen zu fixieren. Das Gelenk lässt sich somit mit zwei Wellen verbinden. Das Gelenk und die Wellen sind dabei beispielsweise Teile eines Antriebsstrangs eines Kraftfahrzeugs. Über die Wellen wird hauptsächlich ein Drehmoment übertragen. Das Gelenk erlaubt beispielsweise die Kompensation von Winkeln zwischen den Wellen im Fahrzeug.

Bei der Montage muss das Gelenk mit den beiden Wellen verbunden werden und es muss zudem noch Gelenkfett für das Gelenk eingebracht werden. Das Gelenkfett sollte entsprechend von einem möglichst abgeschlossenen Hohlraum der Gelenkanordnung umgeben sein. Gelenkfett ist dabei eine allgemeine Bezeichnung für eine Materie, die der Schmierung des Gelenks dient.

Zwischen einem Deckel und einem Dichtbalg angeordnete Gelenke offenbaren die DE 10 2006 062 822 B4 oder die EP 2 264 327 B1.

Eine abgeschlossene Anordnung mit zwei sich einander gegenüberliegenden Gelenken offenbaren die US 3,714,797 und die US 4,185,475. Dabei werden jeweils zwei Dichtbalge verwendet.

Eine Verbindung einer Welle mit einer Innennabe eines Gelenks vermittels einer Mutter offenbart die DE 37 39 927 A1.

Die der Erfindung zugrundeliegende Aufgabe besteht daher darin, eine Gelenkanordnung vorzuschlagen, die sich für die Montage unter Beachtung des Einbringens des Gelenkfetts eignet.

Die Erfindung löst die Aufgabe durch eine Gelenkanordnung mit den Merkmalen des ersten Anspruchs. Die Mutter dient dabei der Fixierung an einer ersten Welle und die Adaptereinheit erlaubt die Verbindung mit einer zweiten Welle. Das Gelenk weist eine Innennabe, eine Außennabe, Kugeln und einen Käfig mit Aussparungen für die Kugeln auf. Es handelt sich somit um ein sogenanntes Gleichlaufgelenk. Die Innennabe weist eine Aussparung mit einer Innenverzahnung zur Aufnahme einer ersten Welle auf. Die erste Welle sollte daher vorzugsweise über eine zur Innenverzahnung passende Außenverzahnung verfügen. Die Mutter erlaubt die Fixierung der Innennabe, in der die erste Welle eingebracht ist, indem die Innennabe beispielsweise gegen ein Lager auf der ersten Welle oder z. B. gegen einen Absatz der ersten Welle verspannt wird. Um die Kugeln befindet sich ein Hohlraum der Gelenkanordnung. Dieser Hohlraum erlaubt beispielsweise die Einbringung des Gelenkfetts. Der Hohlraum ist dabei an zwei Stirnseiten von jeweils einer Dichtvorrichtung verschlossen. Die Stirnseiten liegen sich dabei vorzugsweise entlang einer Längsachse der Gelenkanordnung einander gegenüber. Die Stirnseiten sind weiterhin vorzugsweise der ersten Welle bzw. einer zweiten Welle zugewandt. Die Adaptereinheit weist eine erste Adapterkomponente und eine zweite Adapterkomponente auf. Die erste Adapterkomponente ist ringförmig ausgestaltet und weist eine Aussparung mit einem ersten Innendurchmesser auf. Die zweite Adapterkomponente ist ringförmig ausgestaltet. Die zweite Adapterkomponente weist eine erste Innenaussparung mit dem ersten Innendurchmesser und eine zweite Innenaussparung mit einem zweiten Innendurchmesser auf. Der erste Innendurchmesser ist größer als der zweite Innendurchmesser. Der erste Innendurchmesser ist zumindest gleich einem größten Außendurchmesser der Mutter.

Eine Art der Montage der Gelenkanordnung kann somit beispielweise in folgenden Schritten bestehen:
- Die Gelenkanordnung wird mit einer ersten Welle verbunden, indem die Welle in die Innennabe eingebracht wird.
- Die Fixierung relativ zu der ersten Welle erfolgt über das Anziehen der Mutter.
- Hierauf wird das Gelenkfett in den Hohlraum eingebracht. Alternativ wurde es vorab in den Hohlraum eingebracht.
- Die zweite Dichtvorrichtung wird geschlossen.
- Die Verbindung mit der zweiten Welle erfolgt anschließend über die Adaptereinheit. Je nach Ausgestaltung der Adaptereinheit kann dies auch in mindestens zwei Schritten erfolgen.

Die erste Dichtvorrichtung wird je nach Ausgestaltung vor der Verbindung mit der ersten Welle geschlossen oder dies geschieht danach.

Die Adaptereinheit ist zumindest zweiteilig ausgeführt. Die Adaptereinheit weist somit eine erste Adapterkomponente und eine zweite Adapterkomponente auf. Die Zweiteiligkeit erlaubt beispielsweise einen Übergang zwischen unterschiedlichen Radien. Es kann beispielsweise das Gelenk mit einer Adapterkomponente und die zweite Welle mit der anderen Adapterkomponente verbunden werden. Bei der folgenden Montage werden dann erst die beiden Adapterkomponenten miteinander verbunden.

Die erste Adapterkomponente ist ringförmig ausgestaltet und weist eine Aussparung mit einem ersten Innendurchmesser auf. Die zweite Adapterkomponente ist ebenfalls ringförmig ausgestaltet. Die zweite Adapterkomponente hat eine erste Innenaussparung mit dem ersten Innendurchmesser und eine zweite Innenaussparung mit einem zweiten Innendurchmesser. Dabei ist der erste Innendurchmesser größer als der zweite Innendurchmesser und der erste Innendurchmesser ist zumindest gleich einem größten Außendurchmesser der Mutter. Das Gelenk hat dabei in einer Ausgestaltung einen größeren Außendurchmesser als die zweite Welle.

Wird also beispielsweise die erste Adapterkomponente mit dem Gelenk verbunden, so kann durch die Wahl des ersten Innendurchmessers und somit durch die Aussparung der ersten Adapterkomponente hindurch die Mutter noch festgezogen werden. Der zweite Innendurchmesser und die zweite Welle sind vorzugsweise passend zueinander abgestimmt, sodass z. B. die zweite Welle auf die zweite Adapterkomponente aufsteckbar ist.

In einer Ausgestaltung ist vorgesehen, dass eine der Dichtvorrichtungen und zwar insbesondere die der ersten Welle zugeordnete - und daher im Folgenden als erste Dichtvorrichtung bezeichnete - Dichtvorrichtung durch einen Dichtbalg gebildet ist. Der Dichtbalg ist mit einer Außenseite der Innennabe und mit einem die Außennabe des Gelenks umfassenden Gehäuse verbunden. Der Dichtbalg der ersten Dichtvorrichtung erstreckt sich in allgemeiner Form von der Innennabe zu der Außennabe des Gelenks.

In einer Ausgestaltung ist das Gehäuse, das auch die Außennabe umfasst, mit einer Außenseite der Adaptereinheit verbunden.

In einer Ausgestaltung sind die'erste Adapterkomponente und die zweite Adapterkomponente für eine Übertragung eines Drehmoments ausgestaltet.

Für die Drehmomentübertragung verfügen in einer Ausgestaltung die erste Adapterkomponente und die zweite Adapterkomponente jeweils über eine Hirth-Verzahnung an einer Stirnseite. Die Stirnseiten sind in einer Ausgestaltung weiterhin jeweils flanschartig ausgeführt, wobei z. B. mindestens eine Schraube durch die Flansche für die Fixierung der beiden Komponenten miteinander verwendet werden kann.

In einer Ausgestaltung ist die zweite Adapterkomponente für eine Verbindung mit einer zweiten Welle ausgeführt. Dies geschieht beispielsweise durch eine Außenverzahnung auf der zweiten Adapterkomponente oder durch eine Innenverzahnung in einer Aussparung der zweiten Adapterkomponente.

In einer Ausgestaltung verfügt die zweite Adapterkomponente über einen radial nach außen ragenden Flanschabschnitt. Gegen diesen Flanschabschnitt stößt bei der Montage beispielsweise die zweite Welle an.

In den folgenden Ausgestaltungen wird die zweite Dichtvorrichtung beschrieben, die den Hohlraum in Richtung der Adaptereinheit und in Richtung der zweiten Welle verschließt.

In einer Ausgestaltung ist die zweite Dichtvorrichtung durch ein Blechteil und einen Dichtbalg gebildet. Das Blechteil weist zumindest zwei Abschnitte auf. Zwischen der Innennabe und der Mutter befindet sich ein erster Abschnitt des Blechteils. Das Blechteil ist somit zwischen Innennabe und Mutter eingeklemmt. Angrenzend an den ersten Abschnitt des Blechteils befindet sich ein zweiter Abschnitt des Blechteils, der die Mutter radial umgibt. Das Umgeben ist dabei in einer Ausgestaltung nur teilweise gegeben bzw. beschränkt sich in einer Ausgestaltung darauf, dass der zweite Abschnitt sich radial nach außen erstreckt. Der Dichtbalg ist zwischen dem zweiten Abschnitt des Blechteils und einer Innenseite der Adaptereinheit und in einer Ausgestaltung einer Innenseite der ersten Adapterkomponente angeordnet.

In einer Ausgestaltung ist somit ein - zweiter - Dichtbalg vorgesehen, der quasi von der ersten Adapterkomponente zu der Innennabe bzw. zu der Mutter geführt ist.

In den weiteren Ausgestaltungen ist die zweite Dichtvorrichtung durch einen Deckel gebildet. Der Deckel ist dabei in einer Ausgestaltung becherförmig ausgeführt, wobei der Boden des Bechers dem Gelenk zugewandt ist.

In einer Ausgestaltung befindet sich die seitliche Wandung des Bechers zumindest in der ersten Adapterkomponente und in einer weiteren Ausgestaltung teilweise auch in der zweiten Adapterkomponente.

In einer Ausgestaltung ist der Deckel zumindest in eine Aussparung der Adaptereinheit und in einer weiteren Ausgestaltung insbesondere in eine Aussparung der ersten Adapterkomponente einbringbar. Diese Aussparung wird dann von dem Deckel im eingebrachten Zustand verschlossen. In einer Ausgestaltung ist ergänzend noch ein Dichtelement, z. B. ein O-Ring vorhanden.

In einer weiteren Ausgestaltung ist der Deckel ebenfalls becherförmig ausgestaltet und verfügt über eine Vertiefung oder Absenkung im Boden. Eine solche Absenkung erlaubt es beispielsweise gezielt auf Gelenkeigenschaften, wie z. B. den maximalen Beugewinkel des Gelenks Einfluss zu nehmen.

In einer Ausgestaltung weist die Aussparung der Innennabe einen ersten Mutteraufnahmeabschnitt und einen zweiten Mutteraufnahmeabschnitt auf. Die Mutter verfügt über einen ersten Mutterabschnitt und einen zweiten Mutterabschnitt, wobei der erste Mutterabschnitt einen größeren Außendurchmesser als der zweite Mutterabschnitt aufweist. Weiterhin ist der erste Mutteraufnahmeabschnitt zur Aufnahme des ersten Mutterabschnitts und der zweite Mutteraufnahmeabschnitt zur Aufnahme des zweiten Mutterabschnitts ausgestaltet. In dieser Ausgestaltung ist die Mutter somit in die Innennabe einbringbar. Somit wird bei der Montage beispielsweise die erste Welle in die Innennabe eingebracht und die Mutter wird mit der ersten Welle verschraubt. Durch den Abgleich der Radien kann dabei die Mutter in der Aussparung der Innennabe gleichsam verschwinden.

Erfindungsgemäß verfügt die Gelenkanordnung über eine erste Welle. Dies ist somit die Welle, in deren Richtung der Hohlraum durch die erste Dichtvorrichtung verschlossen wird und die über die Mutter mit der Innennabe kontaktiert wird.

Die erste Welle weist erfindungsgemäß einen ersten Bereich mit einem ersten Außendurchmesser und einem stirnseitigen zweiten Bereich mit einem zweiten Außendurchmesser auf. Der zweite Außendurchmesser ist kleiner als der erste Außendurchmesser. Der erste Bereich trägt eine Außenverzahnung, die passend zu der Innenverzahnung der Aussparung der Innennabe ausgestaltet ist. Der zweite Bereich weist ein Außengewinde passend zum Innengewinde der Mutter auf. Die Mutter weist einen ersten Mutterabschnitt und einen zweiten Mutterabschnitt auf, wobei der erste Mutterabschnitt einen größeren Außendurchmesser als der zweite Mutterabschnitt aufweist. Dabei ist eine axiale Länge des zweiten Bereichs im Wesentlichen gleich einer axialen Länge des zweiten Mutterabschnitts.

In einer Ausgestaltung sind Mutter, Innennabe und erste Welle so ausgestaltet, dass der erste Mutterabschnitt gegen die Innennabe anstößt. In einer alternativen Ausgestaltung kann die Mutter in die Aussparung der Innennabe - z. B. bedingt durch die Längenverhältnisse und radialen Abmessungen - auch mit dem ersten Mutterabschnitt eingebracht werden.

In einer Ausgestaltung weist die erste Adapterkomponente einen Anschlagbereich auf. Der Anschlagbereich hat dabei einen kleineren Innendurchmesser als die Aussparung der ersten Adapterkomponente mit dem ersten Innendurchmesser. Es besteht also ein Bereich einer Verengung in der Aussparung der ersten Adapterkomponente. Der Innendurchmesser des Anschlagbereichs ist zudem kleiner als ein größter Außendurchmesser des die zweite Dichtvorrichtung bildenden Deckels. Der Deckel wird somit durch den Anschlagbereich entgegen der Richtung zum Gelenk gehalten.

In einer Ausgestaltung verfügt der Deckel über einen Becherboden, in dem sich eine Absenkung befindet. Der Außendurchmesser der Absenkung ist dabei gleich oder kleiner als der Innendurchmesser des Anschlagbereichs. Der Deckel sitzt also in dieser Ausgestaltung in der Aussparung des Anschlagbereichs.

Im Einzelnen gibt es eine Vielzahl von Möglichkeiten, die erfindungsgemäße Mutter auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. Es zeigen:
- Fig. 1: einen Schnitt durch eine erste Ausgestaltung der Gelenkanordnung,
- Fig. 2: einen Schnitt durch eine zweite Ausgestaltung der Gelenkanordnung,
- Fig. 3: einen Schnitt durch eine dritte Ausgestaltung der Gelenkanordnung,
- Fig. 4: einen Schnitt durch eine vierte Ausgestaltung der Gelenkanordnung und
- Fig. 5: einen Schnitt durch eine fünfte Ausgestaltung der Gelenkanordnung.

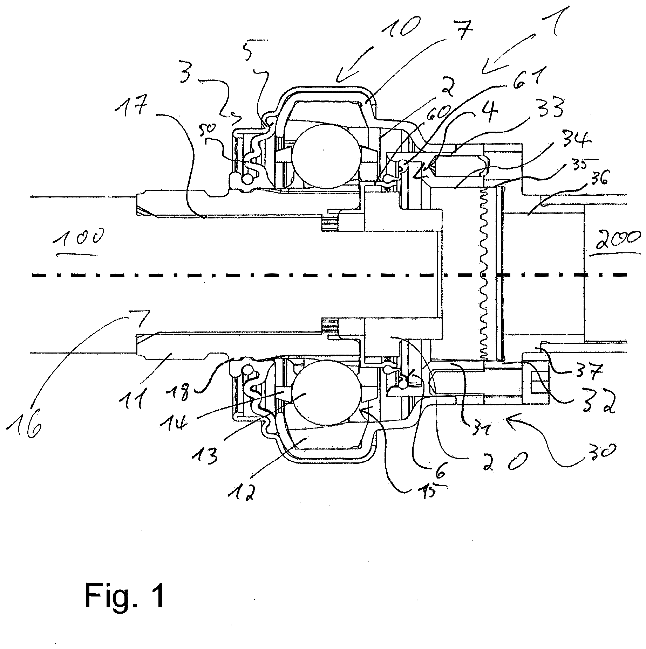

Die Fig. 1 zeigt eine erste Ausgestaltung der Gelenkanordnung 1, die eine Verbindung des Gelenks 10 mit einer ersten Welle 100 und einer zweiten Welle 200 erlaubt. Die Gelenkanordnung 1 verfügt dafür über das Gelenk 10, die Mutter 20 und eine Adaptereinheit 30.

Das Gelenk 10 besteht aus einer Innennabe 11, einer Außennabe 12 und Kugeln 13 für die Drehmomentübertragung zwischen der Innennabe 11 und der Außennabe 12. Die Kugeln 13 sind in den Aussparungen 15 eines Käfigs 14 angeordnet.

Die Kugeln 13 sind weiterhin von einem - hier nicht darstellten - Gelenkfett in einem Hohlraum 2 der Gelenkanordnung 1 befindlich. Der Hohlraum 2 ist dabei an den zwei Stirnseiten 3, 4 von jeweils einer Dichtvorrichtung 5, 6 verschlossen.

Die Innennabe 11 verfügt über eine Aussparung 16 mit einer Innenverzahnung 17, in die die erste Welle 100 mit einer entsprechenden Außenverzahnung eingebracht wird. Die Innennabe 11 wird über die Mutter 20 in Richtung einer mit einem größeren Außendurchmesser als der Bereich mit der Außenverzahnung aufweisenden Bereich der ersten Welle 100 gepresst und somit axial entlang der Längsachse der Gelenkanordnung 1 fixiert.

Die Dichtvorrichtung 5 an der Stirnseite 3 in Richtung der ersten Welle 100 wird dabei durch einen Dichtbalg 50 gebildet. Der Dichtbalg 50 ist dabei an einer Seite an einer Außenseite 18 der Innennabe 11 und an einer anderen Seite mit einem Gehäuse 7 verbunden.

Das Gehäuse 7 umfasst die Außennabe 12 des Gelenks 10 und ist weiterhin mit der Adaptereinheit 30 - insbesondere mit der Außenseite 33 einer ersten Adapterkomponente 31 - verbunden. Das Gehäuse 7 dient somit auch der Drehmomentübertragung. Das Gehäuse 7 ist ergänzend noch im Bereich der Außennabe 12 von einer in Richtung der ersten Welle 100 sich erstreckenden Umfassungseinheit umgeben, wobei der eine Endbereich des Dichtbalgs 50 insbesondere zwischen der Umfassungseinheit und der Außenseite des Gehäuses 7 fixiert ist.

Die zweite Dichtvorrichtung 6 an der zweiten Stirnseite 4 des Hohlraums 2 wird durch ein Blechteil 60 und einen weiteren Dichtbalg 61 gebildet. Das Blechteil 60 verfügt über einen Abschnitt, der zwischen der Innennabe 11 und der Mutter 20 fixiert ist. Ein weiterer Abschnitt des Blechteils 60 ragt radial nach außen und umfasst die Mutter 20. Der weitere Dichtbalg 61 ist mit dem die Mutter 20 umgebenden Abschnitt des Blechteils 60 und mit einer Innenseite der Adaptereinheit 30 verbunden. Durch das Blechteil 60 und den weiteren Dichtbalg 61 wird somit ein Abschluss des Hohlraums 2 geschaffen.

Die Adaptereinheit 30 besteht aus einer ersten Adapterkomponente 31 und einer zweiten Adapterkomponente 32. Diese Aufteilung der Adaptereinheit 30 in zwei Komponenten 31, 32 mit unterschiedlichen Außendurchmessern erlaubt zum einen den Übergang auf einen kleineren Außendurchmesser der zweiten Welle 200 und zum anderen den Zugriff auf die Mutter 20 während der Montage, sodass die Mutter 20 angezogen werden kann.

Die erste Adapterkomponente 31 und die zweite Adapterkomponente 32 verfügen jeweils über eine stirnseitige Hirth-Verzahnung zur Übertragung des Drehmoments.

Die erste Adapterkomponente 31 ist ringförmig und hat eine Innenaussparung 34 mit einem ersten Innendurchmesser. Der erste Innendurchmesser ist dabei mindestens gleich einem größten Außendurchmesser der Mutter 20.

Die zweite Adapterkomponente 32 hat eine erste Innenaussparung 35 mit dem ersten Innendurchmesser, die sich somit übergangslos an die Aussparung 34 der ersten Adapterkomponente 31 anschließt. Weiterhin verfügt die zweite Adapterkomponente 32 über eine zweite Innenaussparung 36 mit dem zweiten, kleineren Innendurchmesser.

Die zweite Adapterkomponente 32 weist einen radial nach außen ragenden Flanschabschnitt 37 auf, an den die zweite Welle 200 herangeführt wird.

Die zweite Welle 200 verfügt hier über eine Innenverzahnung, die passend zu der Außenverzahnung der zweiten Adapterkomponente 32 ausgestaltet ist. Zu sehen ist weiterhin, dass die flanschartigen Stirnseiten der zwei Adapterkomponenten 31, 32 durch Schrauben miteinander fixiert sind.

Insgesamt fließt das Drehmoment über die erste Welle 100, durch das Gelenk 10 (also von der Innennabe 11, über die Kugeln 13 auf die Außennabe 12), in das Gehäuse 7, in die erste Adapterkomponente 31, in die zweite Adapterkomponente 32 und schließlich in die zweite Welle 200. Entsprechendes gilt für den umgekehrten Weg eines Drehmoments.

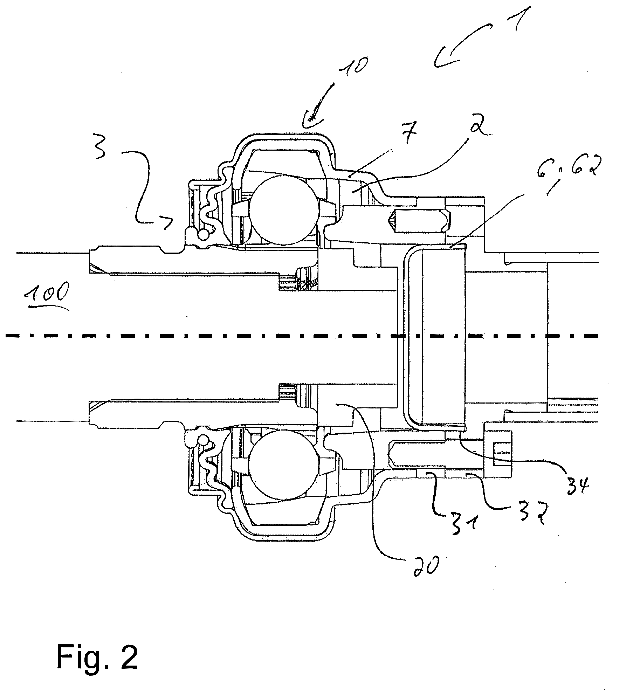

In der Ausgestaltung der Gelenkanordnung 1 der Fig. 2 ist die zweite Dichtvorrichtung 6 durch einen Deckel 62 gebildet. Die erste Dichtvorrichtung in Richtung der hier - zeichnerisch linken - Stirnseite 3 besteht weiterhin aus dem Dichtbalg 50.

Der Deckel 62 ist becherförmig ausgestaltet und der Boden des Bechers ist dem Gelenk 10 zugewandt. Der Außendurchmesser des Deckels 62 und der Innendurchmesser der Aussparung 34 sind so aufeinander abgeglichen, dass der Deckel 62 in die erste Adapterkomponente 31 einbringbar ist und diese verschließt. Somit ist auch der Hohlraum 2 in dieser Richtung verschlossen. Somit bilden das Gelenk 10 und die erste Adapterkomponente 31 eine Art von Einheit, in die z. B. das Gelenkfett eingebracht werden kann. Die Verbindung mit der zweiten Welle 200 erfolgt anschließend separat über die zweite Adapterkomponente 32 und deren Fixierung mit der ersten Adapterkomponente 31.

Zu erkennen ist weiterhin, dass die erste Welle 100 axial entlang der Längsachse über die Innennabe 11 hinausragt und dass die Mutter 20 axial an die Innennabe 11 anschlägt. Das Gehäuse 7 umfasst die Außennabe des Gelenks 10 und ist mit der ersten Adapterkomponente 31 verbunden.

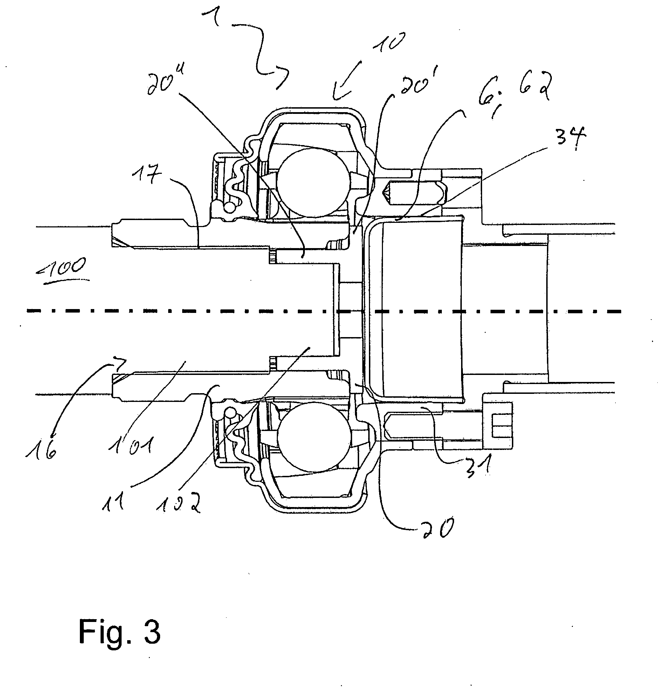

In der Gelenkanordnung 1 der Fig. 3 wird die zweite Dichtvorrichtung 6 ebenfalls durch einen Deckel 62 gebildet, der hier - wie in der Ausgestaltung der Fig. 2 - zumindest in der ersten Adapterkomponente 31 befindlich ist.

Die Ausgestaltung der Fig. 3 hat bei gleichem Gelenk 10 eine kürzere axiale Baulänge, da die Mutter 20 teilweise in der Aussparung 16 der Innennabe 11 verschwindet.

Die erste Welle 100 hat einen ersten Bereich 101 mit einem ersten Außendurchmesser und einem stirnseitigen zweiten Bereich 102 mit einem zweiten, kleineren Außendurchmesser. Auf dem ersten Bereich 101 sitzt eine Außenverzahnung 17 und auf dem zweiten Bereich 102 ein Außengewinde. Somit lassen sich die erste Welle 100 und die Innennabe 11 für die Drehmomentübertragung miteinander verbinden und über die Mutter 20 gegeneinander axial verspannen.

Die Mutter 20 verfügt über einen ersten Mutterabschnitt 20' und einen zweiten Mutterabschnitt 20", wobei der erste Mutterabschnitt 20' einen größeren Außendurchmesser als der zweite Mutterabschnitt 20" aufweist und z. B. eine Mehrkantberandung zum Verdrehen aufweist. Weiterhin ist die axiale Länge des zweiten Bereichs 102 der ersten Welle 100 im Wesentlichen gleich einer axialen Länge des zweiten Mutterabschnitts 20". Die Mutter 20 wird somit gegen die erste Welle 100 gedreht und der erste Mutterabschnitt 20' stößt hier gegen die Stirnseite der Innennabe 11 an.

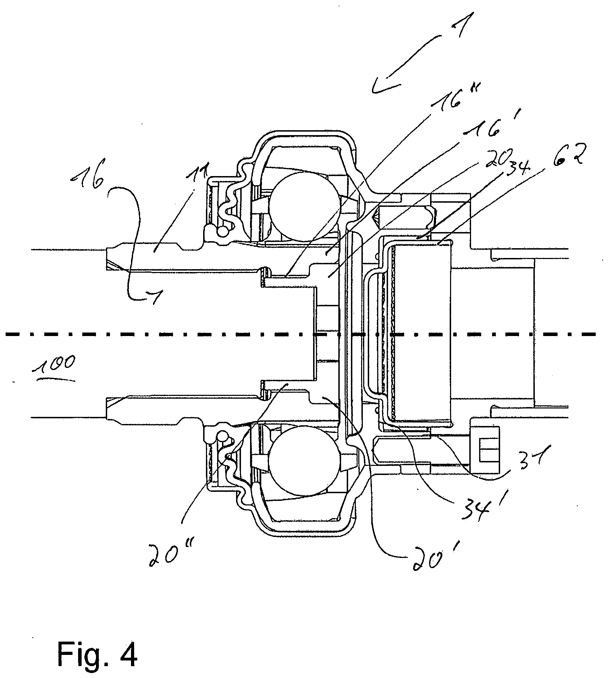

In der Ausgestaltung der Fig. 4 wird die Mutter 20 tiefer in die Innennabe 11 eingebracht und verschwindet damit in ihr.

Die Aussparung 16 der Innennabe 11 weist hierfür in Richtung ihrer Stirnseite einen ersten Mutteraufnahmeabschnitt 16' und einen zweiten Mutteraufnahmeabschnitt 16" auf. Der zweite Mutteraufnahmeabschnitt 16" liegt dann ausgehend von der Stirnseite hinter dem ersten Mutteraufnahmeabschnitt 16' und weist einen kleineren Innendurchmesser auf.

Die Abmessungen des ersten Mutteraufnahmeabschnitts 16' und des zweiten Mutteraufnahmeabschnitts 16" sind dabei so mit den Abmessungen der zwei Mutternabschnitte 20', 20" abgeglichen, dass die Mutter 20 mit dem den kleineren Außendurchmesser aufweisenden Abschnitt voran in die Aussparung 16 der Innennabe 11 einbringbar ist. Damit verkürzt sich die axiale Baulänge der Anordnung.

Weiterhin ist der Deckel 62 hier ebenfalls becherartig ausgestaltet und verfügt in seinem Boden - vorzugweise mittig - über eine Absenkung. Die Absenkung ruht dabei in der Innenaussparung eines Anschlagbereichs 34' der ersten Adapterkomponente 31. Der Anschlagbereich 34' ist dabei eine Art von Verengung des Innenbereichs 34 der ringförmigen ersten Adapterkomponente 31. Wird somit der Deckel 62 in die erste Adapterkomponente 31 in Richtung des Gelenks 10 eingeführt, so stößt er gegen den Anschlagbereich 34' und die Absenkung verschließt den Innenraum des Anschlagbereichs 34'.

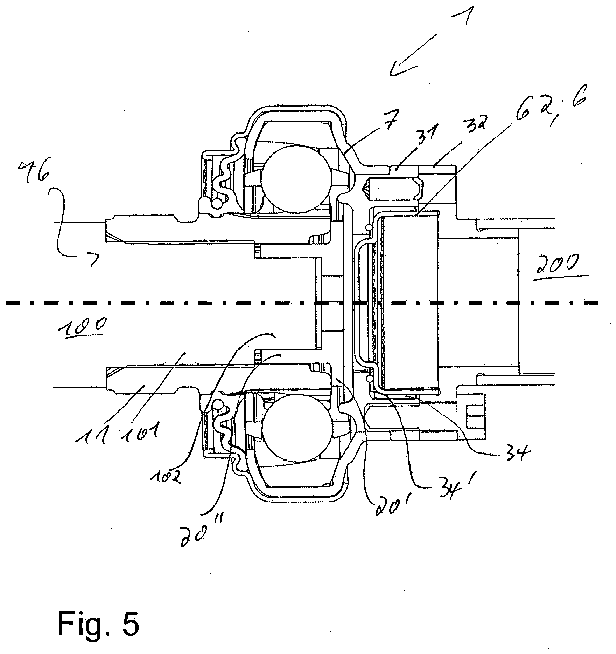

Bei der Ausgestaltung der Gelenkanordnung 1 der Fig. 5 stößt die Mutter 20 mit dem ersten Mutterabschnitt 20' gegen die Stirnseite der Innennabe 11 an. Im Bereich der zweiten Dichtvorrichtung 6 ist auch ein O-Ring zwischen dem Deckel 62 und dem Anschlagsbereich 34' zu erkennen.

## Patentansprüche

1. Gelenkanordnung (1) mit einem Gelenk (10) und einer Adaptereinheit (30), wobei das Gelenk (10) eine Innennabe (11), eine Außennabe (12), Kugeln (13) und einen Käfig (14) mit Aussparungen (15) für die Kugeln (13) aufweist, wobei die Innennabe (11) eine Aussparung (16) mit einer Innenverzahnung (17) zur Aufnahme einer ersten Welle (100) aufweist,
wobei sich um die Kugeln (13) ein Hohlraum (2) der Gelenkanordnung (1) befindet, wobei der Hohlraum (2) an zwei Stirnseiten (3, 4) von jeweils einer Dichtvorrichtung (5, 6) verschlossen ist,
wobei die Adaptereinheit (30) eine erste Adapterkomponente (31) und eine zweite Adapterkomponente (32) aufweist,
wobei die erste Adapterkomponente (31) ringförmig ausgestaltet ist und eine Aussparung (34) mit einem ersten Innendurchmesser aufweist,
wobei die zweite Adapterkomponente (32) ringförmig ausgestaltet ist, wobei die zweite Adapterkomponente (32) eine erste Innenaussparung (35) mit dem ersten Innendurchmesser und eine zweite Innenaussparung (36) mit einem zweiten Innendurchmesser aufweist,
wobei der erste Innendurchmesser größer als der zweite Innendurchmesser ist, und
wobei eine erste Welle (100) vorhanden ist,
**dadurch gekennzeichnet,**
**dass** die Gelenkanordnung (1) eine Mutter (20) aufweist,
**dass** der erste Innendurchmesser zumindest gleich einem größten Außendurchmesser der Mutter (20) ist,
**dass** die erste Welle (100) einen ersten Bereich (101) mit einem ersten Außendurchmesser und einem stirnseitigen zweiten Bereich (102) mit einem zweiten Außendurchmesser aufweist,
**dass** der zweite Außendurchmesser kleiner als der erste Außendurchmesser ist, dass der erste Bereich (101) eine Außenverzahnung trägt, die passend zu der Innenverzahnung (17) der Aussparung (16) der Innennabe (11) ausgestaltet ist, dass der zweite Bereich (102) ein Außengewinde passend zum Innengewinde der Mutter (20) aufweist,
**dass** die Mutter (20) einen ersten Mutterabschnitt (20') und einen zweiten Mutterabschnitt (20") aufweist,
**dass** der erste Mutterabschnitt (20') einen größeren Außendurchmesser als der zweite Mutterabschnitt (20") aufweist, und
**dass** eine axiale Länge des zweiten Bereichs (102) gleich einer axialen Länge des zweiten Mutterabschnitts (20") ist.

2. Gelenkanordnung (1) nach Anspruch 1,
wobei die erste Adapterkomponente (31) und die zweite Adapterkomponente (32) für eine Übertragung eines Drehmoments ausgestaltet sind.

3. Gelenkanordnung (1) nach Anspruch 2,
wobei die erste Adapterkomponente (31) und die zweite Adapterkomponente (32) jeweils eine Hirth-Verzahnung an einer Stirnseite aufweisen.

4. Gelenkanordnung (1) nach einem der Ansprüche 1 bis 3,
wobei die zweite Adapterkomponente (32) für eine Verbindung mit einer zweiten Welle (200) ausgestaltet ist.

5. Gelenkanordnung (1) nach einem der Ansprüche 1 bis 4,
wobei die zweite Adapterkomponente (32) einen radial nach außen ragenden Flanschabschnitt (37) aufweist.

6. Gelenkanordnung (1) nach einem der Ansprüche 1 bis 5,
wobei die erste Adapterkomponente (31) einen Anschlagbereich (34') aufweist, wobei der Anschlagbereich (34') einen kleineren Innendurchmesser als die Aussparung (34) mit dem ersten Innendurchmesser aufweist, und
wobei der Innendurchmesser des Anschlagbereichs (34') kleiner als ein größter Außendurchmesser des die zweite Dichtvorrichtung (6) bildenden Deckels (62) ist.

7. Gelenkanordnung (1) nach einem der Ansprüche 1 bis 6,
wobei eine erste Dichtvorrichtung (5) durch einen Dichtbalg (50) gebildet ist, und wobei der Dichtbalg (50) mit einer Außenseite (18) der Innennabe (11) und mit einem die Außennabe (12) des Gelenks (10) umfassenden Gehäuse (7) verbunden ist.

8. Gelenkanordnung (1) nach Anspruch 7,
wobei das Gehäuse (7) mit einer Außenseite (33) der Adaptereinheit (30) verbunden ist.

9. Gelenkanordnung (1) nach einem der Ansprüche 1 bis 8,
wobei eine zweite Dichtvorrichtung (6) durch ein Blechteil (60) und einen Dichtbalg (61) gebildet ist,
wobei sich zwischen der Innennabe (11) und der Mutter (20) ein erster Abschnitt des Blechteils (60) befindet,
wobei angrenzend an den ersten Abschnitt des Blechteils (60) ein zweiter Abschnitt des Blechteils (60) derartig ausgestaltet ist, dass der zweite Abschnitt die Mutter (20) radial umgibt, und
wobei der Dichtbalg (61) zwischen dem zweiten Abschnitt des Blechteils (60) und einer Innenseite der Adaptereinheit (30) angeordnet ist.

10. Gelenkanordnung (1) nach einem der Ansprüche 1 bis 8,
wobei eine zweite Dichtvorrichtung (6) durch einen Deckel (62) gebildet ist, und wobei der Deckel (62) zumindest in eine Aussparung (34) der Adaptereinheit (30) einbringbar ist und diese verschließt.

11. Gelenkanordnung (1) nach einem der Ansprüche 1 bis 10,
wobei die Aussparung (16) der Innennabe (11) einen ersten Mutteraufnahmeabschnitt (16') und einen zweiten Mutteraufnahmeabschnitt (16") aufweist, wobei die Mutter (20) einen ersten Mutterabschnitt (20') und einen zweiten Mutterabschnitt (20") aufweist,
wobei der erste Mutterabschnitt (20') einen größeren Außendurchmesser als der zweite Mutterabschnitt (20") aufweist,
wobei der erste Mutteraufnahmeabschnitt (16') zur Aufnahme des ersten Mutterabschnitts (20') und der zweite Mutteraufnahmeabschnitt (16") zur Aufnahme des zweiten Mutterabschnitts (20") ausgestaltet ist.

## Claims

1. Joint arrangement (1) with a joint (10) and an adapter unit (30),
whereby the joint (10) has an inner hub (11), an outer hub (12), balls (13) and a cage (14) with recesses (15) for the balls (13),
whereby the inner hub (11) has a recess (16) with an internal toothed gearing system (17) to hold the first shaft (100),
whereby a hollow space (2) of the joint arrangement (1) is located around the balls (13),
whereby the hollow space (2) is closed at two end faces (3, 4) via a sealing mechanism (5, 6),
whereby the adapter unit (30) has a first adapter component (31) and a second adapter component (32),
whereby the first adapter component (31) is circular and a recess (34) has a first inner diameter,
whereby the second adapter component (32) is circular,
whereby the second adapter component (32) has a first inner recess (35) with the first inner diameter and a second inner recess (36) with a second inner diameter,
whereby the first inner diameter is greater than the second inner diameter,
and
whereby an initial shaft (100) is provided,
**characterized by the fact that**
the joint arrangement (1) has a nut (20),
the first inner diameter is at least equal to a large nut outer diameter (20),
the first shaft (100) has a first area (101) with a first outer diameter and a second end face area (102) with a second outer diameter,
the second outer diameter is smaller than the first outer diameter,
the first area (101) has external toothing which is consistent with the internal toothing (17) of the recess (16) of the inner hub (11),
The second area (102) has an external thread matching the internal thread of the nut (20),
the nut (20) has a first nut section (20') and a second nut section (20"),
The first nut section (20') has a larger outer diameter than the second nut section (20"), and
an axial length of the second area (102) is equal to an axial length of the second nut section (20").
Joint arrangement (1) according to Claim 1,

2. whereby the first adapter component (31) and the second adapter component (32) are designed to transmit a torque value.
Joint arrangement (1) according to Claim 2,

3. whereby the first adapter component (31) and the second adapter component (32) each have a Hirth toothing on an end face.
Joint arrangement (1) according to one of Claims 1 to 3,

4. whereby the second adapter component (32) is designed for a connection with a second shaft (200).
Joint arrangement (1) according to one of Claims 1 to 4,

5. whereby the second adapter component (32) has a radially outwardly projecting flange section (37).
Joint arrangement (1) according to one of Claims 1 to 5,

6. whereby the first adapter component (31) has a stop area (34'), the stop area (34') has a smaller inner diameter than the recess (34) with the first inner diameter, and
the inner diameter of the stop area (34') is smaller than the largest outer diameter of the lid (62) forming a second sealing mechanism (6).

7. Joint arrangement (1) according to one of Claims 1 to 6,
whereby a first sealing mechanism (5) is formed by a bellow seal (50) and the bellow seal (50) is connected to an outer side (18) of the inner hub (11) and a housing (7) encompassing the outer hub (12) of the joint (10).
Joint arrangement (1) according to Claim 7,

8. whereby the housing (7) is connected to an outer side (33) of the adapter unit (30).
Joint arrangement (1) according to one of Claims 1 to 8,

9. whereby a second sealing mechanism (6) is formed by a sheet metal part (60) and a bellow seal (61),
whereby the first section of the sheet metal part (60) is located between the inner hub (11) and the nut (20).
whereby a second section of the sheet metal part (60) is arranged adjacent to the first section of the sheet metal part (60) so that the second section radially surrounds the nut (20), and
whereby the bellow seal (61) is placed between the second section of the sheet metal part (60) and an inner side of the adapter unit (30).
Joint arrangement (1) according to one of Claims 1 to 8,

10. whereby a second sealing mechanism (6) is formed by a lid (62), and the lid (62) can at least be introduced into a recess (34) of the adapter unit (30) and seals it.
Joint arrangement (1) according to one of Claims 1 to 10,

11. whereby the recess (16) of the inner hub (11) has a first nut mounting section (16') and a second nut mounting section (16"),
whereby the nut (20) has a first nut section (20') and a second nut section (20"), whereby the first nut section (20') has a larger outer diameter than the second nut section (20"), and
Whereby the first nut mounting section (16') is designed to hold the first nut section (20') and the second nut mounting section (16") to hold the second nut section (20").

## Revendications

1. Dispositif d'articulations (1) doté d'une articulation (10) et d'une unité d'adaptation (30), avec une articulation présentant (10) un moyeu intérieur (11), un moyeu extérieur (12), des billes (13)
et une cage (14) avec des évidements (15) pour les billes (13),
et un moyeu intérieur (11) présentant un évidement (16) avec une denture intérieure (17) pour installer un premier arbre (100),
et autour des billes (13), une cavité (2) du dispositif d'articulations (1),
cette cavité (2) étant fermée sur chacune des deux faces avant (3, **4)** par un dispositif d'étanchéité (5, 6),
avec une unité d'adaptation (30) présentant un premier élément d'adaptation (31) et un seconde élément d'adaptation (32),
l'agencement du premier élément d'adaptation (31) étant circulaire et présentant un évidement (34) avec un premier diamètre intérieur,
l'agencement du second élément d'adaptation (32) étant circulaire et ce second élément d'adaptation (32) présentant un évidement intérieur (35) avec le premier diamètre intérieur et un second évidement intérieur (36) avec le second diamètre intérieur,
sachant que le premier diamètre intérieur est plus grand que le second diamètre intérieur, et
avec un premier arbre (100) disponible,
**caractérisé en ceci que,**
le dispositif d'articulation (1) est doté d'un écrou (20),
le premier diamètre intérieur est au moins égal au plus grand diamètre extérieur de l'écrou (20),
le premier arbre (100) présente une première zone (101) avec un premier diamètre extérieur et une seconde zone sur la face avant (102) avec un second diamètre extérieur,
le second diamètre extérieur est plus petit que le premier diamètre extérieur,
la première zone comporte (101) une denture externe, dont l'agencement est adapté à la denture interne (17) de l'évidement (16) du moyeu intérieur (11),
la seconde zone (102) présentant un filetage extérieur adapté au filetage intérieur de l'écrou (20),
l'écrou (20) présentant une première section (20') et une deuxième section (20"),
la première section de l'écrou (20') présentant un diamètre extérieur plus grand que la seconde section de l'écrou (20") et
la longueur axiale de la seconde zone (102) étant égale à la longueur axiale de la seconde section de l'écrou (20").

2. Dispositif d'articulation (1) selon revendication 1,
le premier élément d'adaptation (31) et le second élément d'adaptation (32) étant agencés afin de permettre un transfert du couple.

3. Dispositif d'articulation (1) selon revendication 2,
le premier élément d'adaptation (31) et le second élément d'adaptation (32) présentant tous deux une denture Hirth sur une face avant.

4. Dispositif d'articulation (1) selon l'une des revendications 1 à 3,
le second élément d'adaptation (32) étant agencé afin de permettre le raccordement à un second arbre (200).

5. Dispositif d'articulation (1) selon l'une des revendications 1 à 4,
le second élément d'adaptation (32) présentant une section de collier (37) orientée radialement vers l'extérieur.

6. Dispositif d'articulation (1) selon l'une des revendications 1 à 5,
le premier élément d'adaptation (31) présentant une zone du butée (34'), sachant que la zone de butée (34') présente un diamètre intérieur plus petit que l'évidement (34) avec le premier diamètre intérieur et
que le diamètre intérieur de la zone de butée (34') est plus petit que le plus grand diamètre extérieur du couvercle (62), constituant le second dispositif d'étanchéité (6).

7. Dispositif d'articulation (1) selon l'une des revendications 1 à 6,
Un premier dispositif d'étanchéité (5) est composé d'un soufflet d'étanchéité (50), le soufflet d'étanchéité (50) étant raccordé à une face externe (18) du moyeu intérieur (11) et à un boîtier (7) entourant le moyeu extérieur (12) de l'articulation (10).

8. Dispositif d'articulation (1) selon revendication 7,
le boîtier (7) étant raccordé à la face externe (33) de l'unité d'adaptation (30).
Dispositif d'articulation (1) selon l'une des revendications 1 à 8,

9. un second dispositif d'étanchéité (6) étant composé d'une pièce en tôle (60) et d'un soufflet d'étanchéité (61),
une première section de la pièce en tôle (60) se trouvant entre le moyeu intérieur (11) et l'écrou (20),
une seconde section de la pièce en tôle (60) directement attenante à la première section de la pièce en tôle (60) étant placée de telle sorte que la seconde section entoure radialement l'écrou (20) et
le soufflet d'étanchéité (61) étant positionné entre la section de la pièce en tôle (60) et une face interne de l'unité d'adaptation (30).
Dispositif d'articulation (1) selon l'une des revendications 1 à 8,

10. un second dispositif d'étanchéité (6) étant composé d'un couvercle (62) et ce couvercle (62) pouvant être inséré dans au moins un évidement (34) de l'unité d'adaptation (30) et refermant cette dernière.
Dispositif d'articulation (1) selon l'une des revendications 1 à 10,

11. l'évidement (16) du moyeu intérieur (11) présentant une première section de montage de l'écrou (16') et une seconde section de montage de l'écrou(16"), l'écrou (20) présentant une première section (20') et une deuxième section (20"),
la première section de l'écrou (20') présentant un diamètre extérieur plus grand que la seconde section de l'écrou (20"),
la première section de montage de l'écrou (16') étant agencée pour monter la première section de l'écrou (20') et la seconde section de montage de l'écrou (16') pour monter la seconde section de l'écrou (20').
